# EUROPÄISCHE PATENTSCHRIFT

(11) **EP 0 882 236 B1**
(45) Veröffentlichungstag und Bekanntmachung des Hinweises auf die Patenterteilung: **10.04.2002**
(21) Anmeldenummer: 97903337.0
(22) Anmeldetag: 20.02.1997
(51) Int. Cl.: G01P 5/00, G01P 13/02, G01M 9/00, G12B 5/00, F02C 7/00

(54) **Positionierung einer Messonde**
Positioning a measuring probe
Positionennement d'une sonde de mesure

(30) Priorität: 23.02.1996 DE 19606794; 14.06.1996 DE 29610438 U
(43) Veröffentlichungstag der Anmeldung: 09.12.1998
(73) Patentinhaber: MTU Aero Engines GmbH, 80995 München (DE)
(72) Erfinder: KERNER, Leander, D-81673 München (DE); VOLZ, Hans-Dieter, D-85716 Unterschlei heim (DE)
(74) Vertreter: Einsele, Rolf W.
(86) Internationale Anmeldenummer: EP9700807
(87) Internationale Veröffentlichungsnummer: WO9731271

(56) Entgegenhaltungen:
- US-A- 4 215 458
- EXPERIMENTS IN FLUIDS, Bd. 14, Nr. 6, 1.Januar 1993, Seiten 475-476, XP000384915 LAU S ET AL: "A COMPUTER OPERATED TRAVERSING GEAR FOR THREE-DIMENSIONAL FLOW SURVEYS IN CHANNELS"

## Beschreibung

Die Erfindung betrifft eine Vorrichtung zur Positionierung einer Meßsonde bezüglich einer Sondenachse A nach dem Oberbegriff des Anspruches 1.

Positioniereinrichtungen dienen für verschiedenste Positionierungsaufgaben, bei welchen Sonden, Fühler, Greifer, Werkezuge u.ä. an einen vorbestimmten Ort und in einer definierten Lage gebracht werden sollen. In Strömungsmeßstrecken beispielsweise sind die verschiedensten Strömungsmeßsonden wie Druck-, Temperatur-, Anemometer-, Richtungs- und Sondermeßsonden an genau vorgegebenen Meßorten zu positionieren. Die je nach Meßaufgabe sehr exakt durchzuführende Positionierung wird häufig durch besondere Umgebungsbedingungen erschwert wie beispielsweise durch hohe Temperaturen. Bei Sonden mit von der Sondenachse abgewinkelten Sondenköpfen ist zumindest eine Bewegung längs der Sondenachse und Rotieren um die Sondenachse erforderlich, um den Sondenkopf wie gewünscht auf das Meßobjekt auszurichten. Dabei sind häufig Verschiebewege von mehreren Dtzd cm und Rotation von +/- 180 Winkelgraden erforderlich. Gesteuert werden derartige Positioniereinrichtungen zumeist unter Zuhilfenahme eines entsprechend der Positionierungsaufgabe programmierten Computers. Um auch bei räumlich beengten Einbauverhältnissen Messungen bzw. Positionierungen durchführen zu können, sind Geräte mit kompakten Abmessungen erwünscht.

Hiervon ausgehend ist es Aufgabe der Erfindung, eine gattungsgemäße Vorrichtung zur Positionierung einer Meßsonde anzugeben, die eine sehr präzise Positionierung einer Meßsonde längs einer Sondenachse A und Verdrehung der Meßsonde bezüglich dieser Achse ermöglicht, wobei die Vorrichtung möglichst wenig Einbauraum beanspruchen sollte.

Erfindungsgemäß wird die Aufgabe durch die kennzeichnenden Merkmale des Anspruches 1 gelöst.

Die Erfindung hat den Vorteil, daß durch die koaxiale Anordnung der Stelleinheiten zum Verdrehen und zur Längsverschiebung der Sonde sowie durch das dazwischen liegend angeordnete Drehzahlreduziergetriebe zum einen eine sehr kompakte Bauweise der Vorrichtung ermöglicht wird und zum anderen ein koaxial gelegener Durchgang freigehalten werden kann, durch welchen der Sondenschaft einsetzbar und bewegbar ist. Die Stelleinheiten und deren Motore umgeben somit den Sondenschaft konzentrisch, was wiederum eine aufwendige Umlenkung der Drehbewegung der Motore mittels Getriebe erübrigt. Mit geringem mechanischen Aufwand läßt sich somit die Drehbewegung der Motoren in eine Dreh- bzw. Längsbewegung der Meßsonde mit sehr geringem Spiel umsetzen. Aufgrund der Tatsache, daß die Linearstelleinheit am Getriebeausgang angeflanscht ist, also die Drehbewegung der Sonde mit ausführt, läßt sich die Linearbewegung der Sonde unabhängig von der Drehbewegung ausführen. Hieraus resultiert wiederum eine vereinfachte Konstruktion gegenüber außerhalb der Sondenachse angebrachten Stelleinheiten, was wiederum aufgrund des geringen Spiels zu einer erhöhten Präzision führt. Desweiteren ermöglicht der modulartige Aufbau der Stelleinheiten und des Getriebes einen einfachen Austausch der Module, wenn beispielsweise unterschiedliche Übersetzungsverhältnisse erwünscht sind oder defekte Teile auszutauschen sind.

Weitere vorteilhafte Ausführungsformen der Erfindung ergeben sich aus den Ansprüchen 2 bis 15.

Bevorzugte Ausführungsformen der Erfindung werden nachfolgend unter Bezugnahme auf die beigefügte Zeichnung erläutert. Es zeigt:
- Fig. 1: eine Prinzipsskizze bei der ein fluiddurchströmtes Rohr mit einer beweglichen Meßsonde bestückt ist, die von einer Positioniervorrichtung bewegt wird,
- Fig. 2: einen Längsschnitt einer Positioniervorrichtung mit verschieblich geführter Spindelmutter und
- Fig. 3: einen Längsschnitt einer Positioniervorrichtung mit feststehender Spindelmutter.

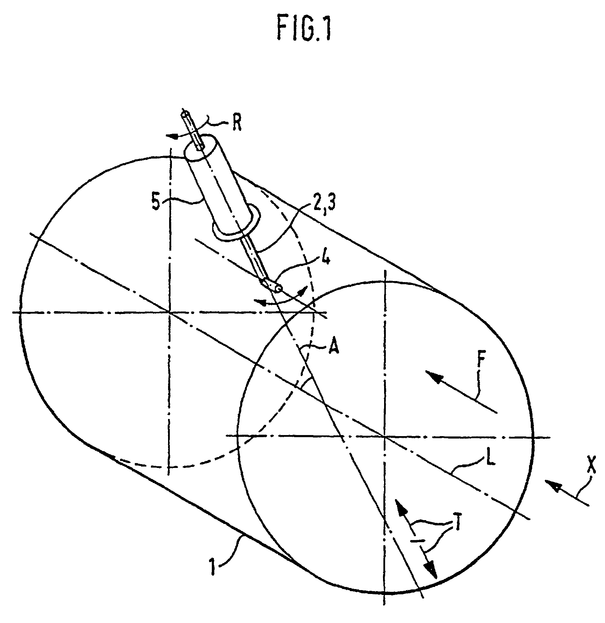

Fig. 1 zeigt ein von einem Fluid F durchströmtes Rohr 1. Zur Meßung strömungsmechanischer Größen der Fluidströmung F ragt in die Strömung eine Meßsonde 2, deren Achse quer zur Rohrlängsachse L verläuft. Die Meßsonde setzt sich aus einem stabförmigen Schaft 3 und an dessen Ende abgewinkelt angebrachten Sondenkopf 4 zusammen. An seinem aus dem Rohr 1 hinausragenden Schaftende 3 ist die Meßsonde 2 in einer zylindrisch ausgebildeten Positioniervorrichtung 5 geführt. Die am Rohrumfang angebrachte Positioniervorrichtung 5 umfaßt den Sondenschaft 3 konzentrisch und vermag die Meßsonde 2 längs ihrer Sondenachse A translatorisch zu verschieben und um die Sondenachse A zu drehen, so daß der Sondenkopf 4 in etwa radial verschoben und bezüglich der Fluidströmung F verdreht werden kann.

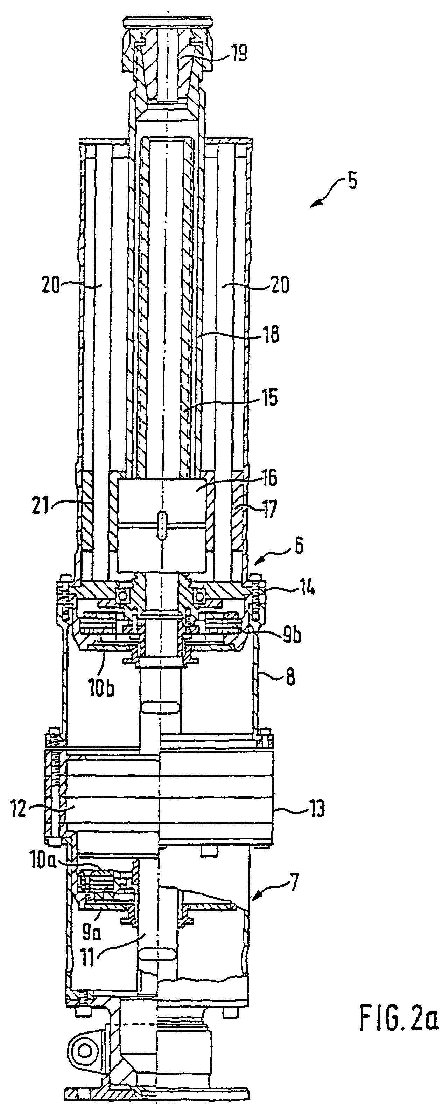

Die in Fig. 2a gezeigte erste Ausführungsform der Positioniervorrichtung 5 setzt sich aus einerLinearstelleinheit 6 zur Verstellung des Sondenkopfes 4 längs der Sondenachse A und aus einer Rotationsstelleinheit 7 zur Verdrehung des Sondenkopfes 4 um die Sondenachse A zusammen. Beide Stelleinheiten 6 und 7 sind mit axialem Versatz zueinander, koaxial zur Geräteachse G, die mit der Sondenachse A zusammenfällt, innerhalb eines hohlzylindrischen Gehäuses 8 angeordnet. Beide Stelleinheiten 6 und 7 verwenden als Antrieb einen Gleichstrom-Hohlwellenmotor 9, wobei der Läufer 10 am Motor 9 der Rotationsstelleinheit 7 eine Hohlwelle 11 konzentrisch umgibt und diese antreibt. Diese wirkt wiederum auf ein unter dem Namen " Harmonic-Drive" bekannt gewordenes Untersetzungsgetriebe 12, das ebenfalls mit den Hohlwellenmotoren 9 konzentrisch zur Geräteachse G in einem ersten Gehäuseteil 13 untergebracht ist. Am Getriebeausgang ist ein zweites hohlzylindrisch ausgebildetes Gehäuseteil 14 angeflanscht, in welchem drehfest und ebenfalls koaxial zur Geräteachse G die Linearstelleinheit 6 angeordnet ist, so daß diese sich mit dem zweiten Gehäuseteil (14) dreht. Als Antrieb dient der Linearstelleinheit 6 ebenfalls ein Gleichstrom-Hohlwellenmotor 9b der über eine Spindelanordnung 15, 16 die Meßsonde 2 längs der Sondenachse A bewegt. Hierzu dient eine im zweiten Gehäuseteil 14 koaxial wälzgelagerte Gewindespindel 15 die am Läufer 10b des Hohlwellenmotors 9b direkt angeflanscht ist und von diesem drehangetrieben wird. Auf der Gewindespindel 15 läuft wiederum eine von einem Führungskäfig 17 umgebene Spindelmutter 16 die bei Drehbewegung der Gewindespindel 15 längs der Geräteachse G vor- und zurückläuft. An dieser Spindelmutter 16 ist mit seinem einen Ende ein Hubrohr 18 angebracht, so daß das Hubrohr 18, welches die Gewindespindel 15 konzentrisch umgibt, bei der Längsbewegung der Spindelmutter 16 aus dem zweiten Gehäuseteil 14 heraus bzw. hereinfährt. Am jenseits der Spindelmutter 16 gelegenen Ende des Hubrohres 18 ist eine Spanneinrichtung 19 angebracht, über welche der Sondenschaft 3 in die Positioniervorrichtung 5 hindurchgeschoben und mit dem Hubrohr 18 verspannt werden kann, so daß mit der Bewegung des Hubrohres 18 eine Längsverschiebung und Drehbewegung der Meßsonde 2 erfolgen kann. Somit erfolgt über das unmittelbar an der Spindelmutter 16 angebrachte Hubrohr 18 eine teleskopartige Bewegung der Meßsonde 2. Um die Spindelmutter 16 bei ihrer Längsbewegung präzise führen zu können, ist diese vom Führungskäfig 17 umgeben, welcher wiederum von innerhalb des zweiten Gehäuseteils 14 parallel zur Geräteachse G angeordneten Führungsschienen 20 in Längsrichtung geführt ist. Diese als Stäbe ausgebildeten Führungsschienen 20 sind konzentrisch um die Spindelanordnung 15,16 angeordnet und durchdringen Führungsbohrungen 21 des Führungskäfigs 17, so daß dieser auf den Führungsschienen 20 längsbeweglich gleitet.

Eine weitere Maßnahme zur Erhöhung der Präzision ergibt sich durch die Ausführung des Spindeltriebes 15,16 als Kugelumlauftrieb.

Zur winkelgenauen Steuerung der Antriebsmotoren 9a,b steht mit deren Läufern 10 jeweils ein Inkrementalencoder in Verbindung, so daß die Drehbewegung der Läufer bzw. die Stellbewegung der Meßsonde 2 computergesteuert erfolgen kann.

Aufgrund der fluchtend hohlzylindrischen Ausführung von Gewindespindel 15, Antriebsmotoren 9a,b und Getriebe 13 kann der Sondenschaft 3 durch die Positioniervorrichtung 5 hindurchgesteckt werden, wodurch sich eine sehr kompakte, platzsparende Anordnung bei hoher Stellgenauigkeit ergibt.

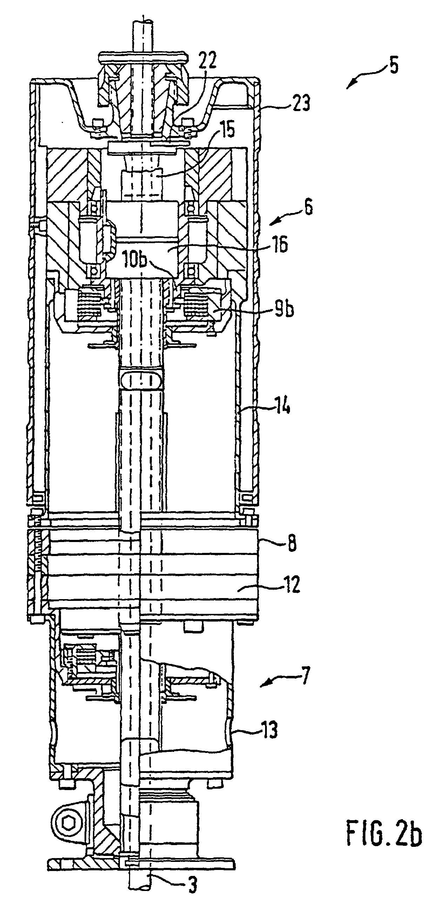

Ein alternatives Ausführungsbeispiel der Positioniervorrichtung 5 ist in Fig. 2b gezeigt. Diese unterscheidet sich von der Ausführung nach Fig. 2a in der Ausführung der Linearstelleinheit 6, wonach der Hohlwellenmotor 9b statt der Gewindespindel 15 die Spindelmutter 16 antreibt Auch hier ist der Hohlwellenmotor 9b der Linearstelleinheit 6 im zweiten Gehäuseteil 14 angeordnet, wobei hier der Läufer 10b die Spindelmutter 16 ohne Zwischenschaltung eines Getriebes antreibt. Hierzu ist die Spindelmutter 16 im zweiten Gehäuseteil 14 wälzgelagert. Die ebenfalls hohlzylindrisch ausgeführte Gewindespindel 15 ist mittels einer Sperre 22 bezüglich des zweiten Gehäuseteils 14 drehfest gehalten, so daß bei Drehung der Spindelmutter 16 sich die Gewindespindel 15 längs der Geräteachse G bzw. Sondenachse A mit der Meßsonde 2 verschiebt. Da im Gegensatz zur Ausführung nach Fig. 2a nicht das Hubrohr 18 sondem die Gewindespindel 15 aus dem Gehäuse bei Verstellung herausfährt ist die Gewindespindel 15 an ihrem äußeren Ende mit einem Hubgehäuse 23 verbunden, welches das zweite Gehäuseteil 14 im eingefahrenen Zustand konzentrisch umgibt. Fährt nun die Gewindespindel 15 heraus, so wird diese durch das umgebende Hubgehäuse 23 vor Verschmutzung und Beschädigung geschützt.

Aufgrund der Tatsache, daß die Spindelmutter 16 sich nicht innerhalb des Gehäuses 8 in Längsrichtung bewegt, kann die Positioniervorrichtung 5 insgesamt kürzer bauen. Im Vergleich zur Ausführung nach Fig. 2a ist die Rotationsstelleinheit 7 mit zugehörigem Untersetzungsgetriebe 12 identisch gehalten, so daß die Vielzahl unterschiedlicher Bauteile gering gehalten werden kann.

Eines der wesentlichen Merkmale beider Ausführungsformen ist die axial versetzte Anordnung von Linear- und Rotationsstelleinheit 6,7 mit dazwischenliegenden Untersetzungsgetriebe 12, wobei die Linearstelleinheit 6 mit der Meßsonde 2 die Drehbewegung gleichförmig ausführt. Diese zusammen mit der konzentrischen Anordnung der Stelleinheiten 6,7 zum Sondenschaft 3 erlaubt einen sehr direkten Antrieb der Meßsonde 2.

## Patentansprüche

1. Vorrichtung zur Positionierung einer Meßsonde (2) bezüglich einer Sondenachse (A) die eine Linearstelleinheit (6) zur Verstellung eines Sondenkopfes (4) längs der Sondenachse (A) und eine Rotationsstelleinheit (7) zur Verdrehung des Sondenkopfes (4) um die Sondenachse A aufweist, **dadurch gekennzeichnet, daß** die Vorrichtung (5) ein Gehäuse (8,13,14) aufweist, innerhalb dessen mit axialem Versatz und koaxial zur Sondenache (A) die beiden Stelleinheiten (6,7) angeordnet sind, wobei die Rotationssielleinheit (7) einen auf ein koaxial zwischen den Stelleinheiten (6,7) angeordnetes Drehzahlreduziergetriebe (12) wirkenden, winkelsteuerbaren Hohlwellenmotor (9a) aufweist und die Linearstelleinheit (6) zu deren Verdrehbarkeit am Getriebeausgang angeflanscht ist und zur zentrischen, verschieblichen und verdrehbaren Führung der Sonde (2) bzw. des Sondenschaftes (3) innerhalb der Vorrichtung (5) diese mit den Stelleinheiten (6,7) hohlzylindrisch ausgeführt ist.

2. Vorrichtung nach Anspruch 1, **dadurch gekennzeichnet, daß** zur Erzeugung der Linearbewegung die Linearstelleinheit (6) eine elektromotorisch drehangetriebene Gewindespindel (15) aufweist, die über eine im Gehäuse (14) verschieblich geführte, auf der Spindel (15) laufende Spindelmutter (16) mit der Sonde (2) über den Sondenschaft (3) unmittelbar oder über ein konzentrisches Hubrohr (18) verbunden ist.

3. Vorrichtung nach Anspruch 2, **dadurch gekennzeichnet, daß** die Spindelmutter (16) einen mit dem Hubrohr (18) verbundenen Führungsschlitten (17) ausbildet, der an innerhalb des Gehäuses (14), parallel zur Sondenachse (A) ausgerichteten Führungsschienen (20) längsbeweglich geführt ist.

4. Vorrichtung nach Anspruch 1, **dadurch gekennzeichnet, daß** zur Erzeugung der Linearbewegung die Linearstelleinheit (6) eine motorisch drehangetriebene Spindelmutter (16) aufweist, innerhalb welcher eine bezüglich der Linearstelleinheit (6) drehfest gehaltene Gewindespindel (15) läuft und die Gewindespindel (15) zur Längsverschiebung der Sonde (2) mit dieser bzw. mit dem Sondenschaft (3) lösbar verbunden ist.

5. Vorrichtung nach einem der Ansprüche 2 bis 4, **dadurch gekennzeichnet, daß** der Spindeltrieb (15,16) als Kugelumlauftrieb ausgeführt ist.

6. Vorrichtung nach einem der Ansprüche 2 bis 5, **dadurch gekennzeichnet, daß** der Spindeltrieb (15,16) durch Vorspannung der Spindelmutter (16) selbsthemmend ausgeführt ist.

7. Vorrichtung nach einem der vorhergehenden Ansprüche, **dadurch gekennzeichnet, daß** das Gehäuse (8) mehrteilig ausgeführt ist, wobei in einem ersten Gehäuseteil (13) die Rotationsstelleinheit (7) befestigt ist und in einem zweiten Gehäuseteil (14) die Linearstelleinbeit (6) befestigt ist, so daß bei Verdrehung der Sonde (2) sich die Gehäuseteile (13,14) entsprechend gegeneinander verdrehen.

8. Vorrichtung nach Anspruch 7, **dadurch gekennzeichnet, daß** das Gehäuse (8) zusätzlich ein mit einer Gewindespindel (15) bzw. Hubrohr (18) verbundenes und bewegbares Hubgehäuse (23) aufweist, welches das zweite Gehäuseteil (14) konzentrisch umgibt.

9. Vorrichtung nach einem der vorhergehenden Ansprüche, **dadurch gekennzeichnet, daß** zum Antrieb der Linearstelleinheit (6) und/oder Rotationsstelleinheit (7) diese einen winkelsteuerbaren Gleichstrom-Hohlwellenmotor (9a bzw. 9b) aufweist.

10. Vorrichtung nach einem der vorhergehenden Ansprüche, **dadurch gekennzeichnet, daß** zur winkelkonformen Steuerung der Antriebsmotoren (9a,b) an deren Rotoren (16a,b) jeweils ein Inkrementalencoder (24) angeflanscht ist.

11. Vorrichtung nach einem der vorhergehenden Ansprüche, **dadurch gekennzeichnet, daß** das Untersetzungsgetriebe (12) als Harmonic-Drive-Getriebe ausgeführt ist.

12. Vorrichtung nach einem der vorhergehenden Ansprüche, dadurch gekennzeichent, daß die Sonde (2) bzw. ihr Sondenschaft (3) am Hubrohr (18) bzw. an der Gewindespindel mittels einer Spanneinrichtung (13) zur Übertragung der Dreh- und Verstellbewegung festlegbar ist.

13. Vorrichtung nach einem der vorhergehenden Ansprüche, **dadurch gekennzeichnet, daß** die Vorrichtung (5) zur beidseitigen Einführbarkeit der Sonde (2) an ihren axialen Enden zentrische Öffnungen aufweist.

14. Vorrichtung nach einem der vorhergehenden Ansprüche, **dadurch gekennzeichnet, daß** das Gehäuse (8) zumindest in einem sondenkopfseitigen Bereich mittels einer Kühlfluidströmung kühlbar ist.

15. Vorrichtung nach Anspruch 14, **dadurch gekennzeichnet, daß** das Gehäuse (8) mit Kühlmittelkanälen versehen ist.

## Claims

1. Device for the positioning of a measuring probe (2) in relation to a probe axis (A) which has a linear adjustment unit (6) for the adjustment of a probe head (4) along the probe axis (A) and a rotation adjusting unit (7) for the rotation of the probe head (4) around the probe axis A **characterised in that** the device (5) has housing (8, 13, 14) within which with axial misalignment and coaxially to the probe axis (A) the two adjustment units (6, 7) are arranged wherein the rotation adjustment unit (7) has an angle controllable hollow shaft motor (9a) influencing a speed reduction transmission (12) arranged coaxially between the adjustment units (6, 7) and the linear adjustment unit (6) is flanged to the twisting ability thereof at the transmission outlet and to the central, displaceable and twistable guide of the probe (2) / the probe shaft (3) within the device (5) this is designed in a hollow cylindrical way with the adjustment units (6, 7).

2. Device according to claim 1 **characterised in that** for the purpose of producing the linear movement the linear adjusting unit (6) has a transmission spindle (15) which is rotation driven by an electro-motor and which is connected via a spindle nut (16) running on the spindle (15) and guided in a displaceable way in the housing (14) with the probe (2) via the probe shaft (3) directly or via a concentric lift pipe (18).

3. Device according to claim 2 **characterised in that** the spindle nut (16) forms a guide carriage (17) connected with the lift pipe (18) which is guided in a longitudinally moveable way on guide rails (20) arranged parallel to the probe axis (A).

4. Device according to claim 1 **characterised in that** for the purpose of producing the linear movement the linear adjustment unit (6) has a rotation driven spindle nut (16) within which a thread spindle (15) held in a rotationally secure way in relation to the linear adjustment unit (6) runs and the thread spindle (15) for the longitudinal displacement of the probe (2) is connected in a releasable way with this / with the probe shaft (3).

5. Device according to one of the claims 2 to 4 **characterised in that** the spindle drive (15, 16) is designed as a circulating ball spindle.

6. Device according to one of the claims 2 to 5 **characterised in that** the spindle drive (15, 16) is designed through pre-tension of the spindle nut (16) in a way retained by friction.

7. Device according to one of the preceding claims **characterised in that** the housing (8) is designed in a multi-component way wherein in a first housing component (13) the rotation adjustment unit (7) is fixed and in a second housing component (14) the linear adjustment unit (6) is fixed so that upon twisting of the probe (2) the housing components (13, 14) correspondingly twist against each other.

8. Device according to claim 7 **characterised in that** the housing (8) additionally has lift housing (23) connected with a thread spindle (15) / lift pipe (18) which surrounds the second housing component (14) concentrically.

9. Device according to one of the preceding claims **characterised in that** for the purpose of driving the linear adjustment unit (6) and / or rotation adjustment unit (7) this has an angle controllable direct current hollow shaft motor (9a / 9b).

10. Device according to one of the preceding claims **characterised in that** for the angle conform control of the drive motors (9a, b) an incremental encoder is flanged onto each of their rotors (16a, b).

11. Device according to one of the preceding claims **characterised in that** the reduction gear is designed as a harmonic drive gear.

12. Device according to one of the preceding claims **characterised in that** the probe (2) / its probe shaft (3) can be fixed on the lift pipe (18) / on the thread spindle by means of a tension device (13) for transferring the rotation and adjustment movement.

13. Device according to one of the preceding claims **characterised in that** the device (5) for the possibility of guiding on both sides of the probe (2) has concentric openings at its axial ends.

14. Device according to one of the preceding claims **characterised in that** the housing (8) can be cooled in an area on the probe head side by means of a cool fluid flow.

15. Device according to claim 14 **characterised in that** the housing (8) is provided with coolant channels.

## Revendications

1. Dispositif de positionnement d'une sonde de mesure (2) par rapport à un axe de sonde (A), qui présente un organe de positionnement linéaire (6) pour le déplacement d'une tête de sonde (4) le long de l'axe de sonde (A) et un organe de positionnement angulaire (7) pour la rotation de la tête de sonde (4) autour de l'axe de sonde (A), **caractérisé par le fait que** le dispositif (5) présente une enveloppe (8, 13, 14) à l'intérieur de laquelle les deux organes de positionnement (6, 7) sont disposés avec un décalage axial et coaxialement à l'axe de sonde (A), dans lequel l'organe de positionnement angulaire (7) présente un moteur à arbre creux (9a) dont la position angulaire peut être commandée et qui agit sur un réducteur de vitesse de rotation (12) disposé coaxialement entre les organes de positionnement (6, 7), et dans lequel l'organe de positionnement linéaire (6) est, pour qu'il soit possible de le faire tourner, fixé par bride à la sortie du réducteur et, pour le guidage centré, avec liberté de coulissement et de rotation, de la sonde (2) ou du fût de sonde (3) à l'intérieur du dispositif (5), ce dispositif est réalisé cylindrique creux et contenant les organes de positionnement (6, 7).

2. Dispositif selon la revendication 1, **caractérisé par le fait que** pour produire le déplacement linéaire, l'organe de positionnement linéaire (6) présente une broche filetée (15) qui est entraînée en rotation par un moteur électrique et qui est reliée par l'intermédiaire d'un écrou (16) guidé, avec liberté de coulissement, dans l'enveloppe (14) et se vissant sur la broche (15), avec la sonde (2) par l'intermédiaire du fût de sonde (3) directement ou par l'intermédiaire d'un tube de déplacement concentrique (18).

3. Dispositif selon la revendication 2, **caractérisé par le fait que** l'écrou (16) forme un chariot de guidage (17) qui est relié au tube de déplacement (18) et qui est guidé avec liberté de déplacement longitudinal, sur des rails de guidage (20) orientés, à l'intérieur de l'enveloppe (14), parallèlement à l'axe de sonde (A).

4. Dispositif selon la revendication 1, **caractérisé par le fait que** pour produire le déplacement linéaire, l'organe de positionnement linéaire (6) présente un écrou (16) qui est entraîné en rotation par un moteur et à l'intérieur duquel se visse une broche filetée (15) tenue sans liberté de rotation relative par rapport à l'organe de positionnement linéaire (6), et que, pour le coulissement longitudinal de la sonde (2), la broche filetée (15) est reliée, de façon amovible, avec cette sonde ou avec le fût de sonde (3).

5. Dispositif selon l'une des revendications 2 à 4, **caractérisé par le fait que** l'entraînement de la broche (15, 16) est réalisé sous forme d'un entraînement de broche filetée à billes.

6. Dispositif selon l'une des revendications 2 à 5, **caractérisé par le fait que** l'entraînement de la broche (15, 16) est réalisé à autoblocage par précontrainte de l'écrou (16).

7. Dispositif selon l'une des revendications précédentes, **caractérisé par le fait que** l'enveloppe (8) est réalisée en plusieurs pièces, l'organe de positionnement angulaire (7) étant fixé dans une première partie (13) de l'enveloppe et l'organe de positionnement linéaire (6) étant fixé dans une seconde partie (14) de l'enveloppe, de sorte que, lors de la rotation de la sonde (2), les parties (13, 14) de l'enveloppe tournent de façon correspondante l'une par rapport à l'autre.

8. Dispositif selon la revendication 7, **caractérisé par le fait que** l'enveloppe (8) présente en outre une enveloppe de déplacement (23) qui est reliée à une broche filetée (15) ou à un tube de déplacement (18) et peut se déplacer avec lui/avec elle et qui entoure concentriquement la seconde partie (14) de l'enveloppe.

9. Dispositif selon l'une des revendications précédentes, **caractérisé par le fait que** pour l'entraînement de l'organe de positionnement linéaire (6) et/ou de l'organe de positionnement angulaire (7), cet organe présente un moteur à arbre creux à courant continu (9a ou 9b) dont la position angulaire peut être commandée.

10. Dispositif selon l'une des revendications précédentes, **caractérisé par le fait que** pour la commande de la position angulaire des moteurs d'entraînement (9a, b) un codeur incrémental (24) est fixé par bride sur le rotor (16a, b) de chacun.

11. Dispositif selon l'une des revendications précédentes, **caractérisé par le fait que** le réducteur (12) est réalisé sous forme d'un mécanisme à excitation harmonique.

12. Dispositif selon l'une des revendications précédentes, **caractérisé par le fait que** la sonde (2) ou son fût (3) peut, pour la transmission du déplacement angulaire et du déplacement linéaire, se fixer au tube de déplacement (18) ou à la broche filetée au moyen d'un dispositif de bridage (13).

13. Dispositif selon l'une des revendications précédentes, **caractérisé par le fait que** le dispositif présente, à ses extrémités axiales, des ouvertures centrées pour faciliter l'introduction de la sonde (2) des deux côtés.

14. Dispositif selon l'une des revendications précédentes, **caractérisé par le fait que** l'enveloppe (8) peut être refroidie au moyen d'un écoulement de fluide de refroidissement au moins dans une zone située du côté de la tête de sonde.

15. Dispositif selon la revendication 14, **caractérisé par le fait que** l'enveloppe (8) présente des canaux pour le fluide de refroidissement.
